# EUROPEAN PATENT APPLICATION

(11) **EP 4 760 819 A1**
(43) Date of publication of application: **17.06.2026**
(21) Application number: 25158736.6
(22) Date of filing: 19.02.2025
(51) Int. Cl.: H01M 4/587, H01M 4/36, C01B 25/00, C01B 32/205, H01M 4/133, H01M 10/0525

(54) **METHOD FOR INCREASING SAFETY OF LITHIUM-ION BATTERIES**

(30) Priority: 12.12.2024 TW 113148301
(71) Applicant: CPC Corporation, Taiwan, Kaohsiung City 81126 (TW)
(72) Inventor: Chen, Yan- Shi, Taiwan (TW)
(74) Representative: Perani & Partners S.p.A.

(57) **Abstract**

Method for increasing safety of lithium-ion batteries includes: (A), heating heavy oil to obtain a raw coke; (B), heating the raw coke to 850-900°C for at least 4 hours at heating rate of 3-5°C/min to obtain a carbon-containing material; (C), grinding and grading the carbon-containing material, taking out a carbon-containing powder with D₅₀ of 8-12µm and D₁₀ of 1-8µm; (D), heating the carbon-containing powder to 1030-1220°C for at least 4 hours at heating rate of 3-10°C/min to obtain a carbon material powder; (E), after adding pitch accounting for at least 4wt% of the carbon material powder to the carbon material powder, heating the carbon material powder to 1030-1220°C for at least 5 hours at heating rate of 0.90-1.25°C/min, to obtain soft carbon modified by pitch; (F), adding the soft carbon to graphite as an anode material, and a weight ratio of the soft carbon to the graphite is 1: 1-39.

## Description

### BACKGROUND OF THE INVENTION

### 1. Field of the Invention

The present disclosure relates to a method for increasing safety of lithium-ion batteries.

### 2. Description of the Related Art

In recent years, lithium-ion batteries (hereinafter referred to as batteries) have been widely used in various electronic products because of their advantages such as high working voltage, quick charging and discharging speed, and long life. Generally speaking, the cathode material of lithium-ion battery may be selected from lithium cobalt oxide, lithium iron phosphate, ternary lithium, lithium manganese oxide, etc., while the anode material may be selected from soft carbon.

Next, as far as the production method of soft carbon are concerned, it mainly includes a front-end process and a back-end process. The front-end process refers to the process of converting heavy oil into a precursor structure (e.g., raw coke), while the back-end process refers to the process of pre-calcination and carbonizing the precursor structure, followed by grinding and grading, then high-temperature carbonization, and then modification carbonization, and finally obtaining a finished product of soft carbon.

For the specific content of the preparation method of soft carbon, it can refer to the applicant's earlier application in the Republic of China (Taiwan patent TWI816598B), and the full text of the earlier application is included in the specification of the present application. In the earlier application, a soft carbon anode material can be provided through specific manufacturing steps that can improve the quick charging and discharging ability and cycle life of batteries.

### BRIEF SUMMARY OF THE INVENTION

In addition, in the process of developing high-energy or high-capacity lithium-ion batteries, the safety of the battery during use is an issue that cannot be ignored. When the battery catches fire, burns or explodes, it is theoretically called thermal runaway, which will seriously affect the safety of the battery during use.

Thermal runaway is when the battery generates abnormally heat during the charge and discharge process because of open circuit, short circuit or electrical imbalance (referring to too low electric capacity or too high internal resistance). Once the battery exceeds the critical temperature of thermal runaway reaction (generally around 150°C), the materials inside the battery will gradually undergo thermal decomposition and exothermic reactions.

Especially, the so-called thermal decomposition and exothermic reactions of the solid-liquid interface phase material on the anode side is considered to be the triggering step of the entire thermal runaway process. The triggering step may result in a rapid increase in the temperature rise of the cell under the operation of heating, quick charge, quick discharge, overcharge or internal short circuit, which causes the thermal decomposition and exothermic reactions of the solid-liquid interface phase material, and finally causes the cell to catch fire, explode and burn.

However, the present inventors found that although the prior art (Taiwan patent TWI816598B) can provide a soft carbon anode material that can improve the quick charging and discharging ability and cycle life of batteries, the prior art fails to discuss the issue aiming at reducing the temperature rise of the cell and increasing the safety of the battery during use, so there is still room for improvement.

In order to solve the above-mentioned problem, a method for increasing safety of lithium-ion batteries of an aspect of the present disclosure includes: step (A), heating heavy oil to obtain a raw coke; step (B), heating the raw coke to 850°C to 900°C for at least 4 hours at a first heating rate of 3°C/min to 5°C/min to obtain a carbon-containing material; step (C), grinding the carbon-containing material, grading the carbon-containing material after grinding, and taking out a carbon-containing powder with D₅₀ between 8µm and 12µm and D₁₀ between 1µm and 8µm; step (D), heating the carbon-containing powder to 1030°C to 1220°C for at least 4 hours at a second heating rate of 3°C/min to 10°C/min to obtain a carbon material powder; step (E), after adding pitch accounting for at least 4wt% of the carbon material powder to the carbon material powder, heating the carbon material powder added with pitch to 1030°C to 1220°C for at least 5 hours at a third heating rate of 0.90°C/min to 1.25°C/min, so as to obtain soft carbon modified by pitch; and step (F), adding the soft carbon to graphite as a first type anode material, and a weight ratio of the soft carbon to the graphite is 1:1-39. The soft carbon obtained in step (E) is referred to as a first type soft carbon.

In one embodiment, the step (C) is to grade the carbon-containing material after grinding and take out a carbon-containing powder with D₅₀ between 8µm and 12µm, D₁₀ between 2µm and 6µm and D₉₀ between 16µm and 18µm; the step (F) is to add the soft carbon to graphite as a second type anode material, and the weight ratio of the soft carbon to the graphite is 1: 1-39. In this case, if the step (C) and the step (F) are changed as described above but the other steps remain unchanged, the soft carbon obtained in step (E) is referred to as a second type soft carbon.

In one embodiment, the step (D) is to heat the carbon-containing powder to 1180°C to 1220°C at the second heating rate; in the step (E), the third heating rate is 0.90°C/min to 1.25°C/min, and the carbon material powder added with pitch is heated to 1180°C to 1220°C; the step (F) is to add the soft carbon to graphite as a third type anode material, and the weight ratio of the soft carbon to the graphite is 1:1-39. In this case, if the step (D) and the step (F) are changed as described above but the other steps remain unchanged, the soft carbon obtained in step (E) is referred to as a third type soft carbon.

In one embodiment, in the step (F), the weight ratio of the soft carbon to the graphite is 1:7/3-39.

In one embodiment, the discharge capacity retention rate of the anode made of the first type, the second type or the third type anode material obtained in step (F) is at least 65% at a discharge current of 6C, and the alternating current internal resistance (ACIR) of the anode is 31.0mQ or less.

In one embodiment, the temperature rise of the anode made of the first type, the second type or the third type anode material obtained in step (F) at the charge current of 5C is less than 30°C, the temperature rise at the discharge current of 5C is less than 33°C.

In one embodiment, under the condition that the weight ratio of the soft carbon to the graphite in the step (F) is 1:1, the temperature rise of the anode made of the second type anode material at the charge current of 5C is less than 11°C, and the temperature rise at the discharge current of 5C is less than 13°C.

In one embodiment, under the condition that the weight ratio of the soft carbon to the graphite in the step (F) is 1:7/3 and the electric capacity of the anode made of the third type anode material in the soft pack cell is 36Ah, the temperature rise at the charge current of 1C is less than 2.1°C, and the temperature rise at the discharge current of 1C is less than 3.3°C.

In one embodiment, under the condition that the weight ratio of soft carbon to graphite in the step (F) is 1:1, the temperature rise of the anode made of the first type, the second type or the third type anode material obtained in the step (F) at the charge current of 3C is less than 7.2°C.

In one embodiment, in the step (F), the first type, the second type or the third type anode material further includes a binder and a conductive carbon black.

An aspect of the present disclosure is completed in view of the above-mentioned problem point of prior art, and the object is to provide a method for increasing safety of lithium-ion batteries during use. Specifically, by using a specific proportion of graphite and soft carbon materials as the anode of lithium-ion batteries, the probability of thermal runaway can be reduced, thus increasing the safety of lithium-ion battery during use.

### BRIEF DESCRIPTION OF THE DRAWINGS

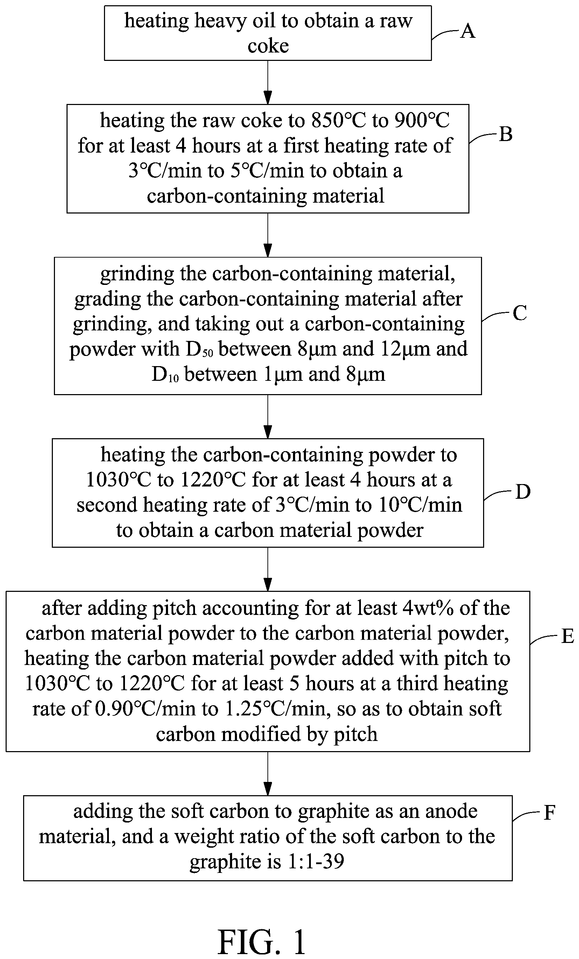

FIG. 1 is a flow chart of a method for increasing safety of lithium-ion batteries during use of the present disclosure.

### DETAILED DESCRIPTION OF THE INVENTION

The implementation of the present disclosure is illustrated by the specific embodiments as follows, so one skilled in the art may understand other advantages and effects of the present disclosure by the contents disclosed in the specification. The present disclosure may also be implemented or applied by other embodiments, and the details in the specification may also be modified and varied based on different views and applications without departing from the spirit of the present disclosure.

Unless otherwise specified herein, the term "A-B" used in the specification and the claims attached includes the meaning of "A or more and B or less". For example, the term "10-40 wt%" includes the meaning of "10 wt% or more and 40 wt% or less".

First, referring to FIG. 1, FIG. 1 is a flow chart of a method for increasing safety of lithium-ion batteries during use according to the present disclosure. As shown in FIG. 1, the method for increasing the safety of lithium-ion batteries during use according to the present disclosure includes: step (A)-step (F). Each step is described in detail below.

### [Step (A)]

Step (A) is a step of heating heavy oil into a raw coke. Specifically, the heavy oil can be transported to a reaction tank, and the heavy oil can be heated for 1-16 hours under the conditions of coking temperature of 480°C-550°C and a pressure of 0.2MPa to 4MPa, so that the heavy oil can be cracked and polycondensation to form the raw coke. In one embodiment, step (A) is to heat the heavy oil at a coking temperature of 500°C and a pressure of 1.0 MPa for 4 hours.

### [Step (B)]

Step (B) is a step of heating the raw coke to 850°C to 900°C for at least 4 hours at a first heating rate of 3°C/min to 5°C/min to obtain a carbon-containing material. Through step (B), the raw coke can be subjected to at least one of the polycondensation reaction, dehydrogenation reaction and cracking reaction, so that the raw coke begins to tend to form a carbon-containing material with sp² hybrid orbital. In one embodiment, step (B) is to heat the raw coke to 900°C for 4 hours at the first heating rate of 5°C/min.

### [Step (C)]

Step (C) is a step of grinding the carbon-containing material, grading the carbon-containing material after grinding, and taking out a carbon-containing powder with D₅₀ between 8µm and 12µm and D₁₀ between 1µm and 8µm. Also, the grinding of step (C) may be carried out by using a high-pressure air grinder, a collision plate grinder, or an impact grinder, etc., and the grading of step (C) may be carried out by using a cyclone classifier or a vibrating classifier, etc., and there is no special limitation. In one embodiment, step (C) is to first grind the carbon-containing material obtained from step (B) to a particle size of about 6µm to 20µm, and then use a cyclone classifier to sieve the carbon-containing material after grinding (the particle size of about 6µm to 20µm), and take out the carbon-containing powder with D₅₀ between 10µm and 12µm, D₁₀ between 6µm and 8µm and D₉₀ between 18µm and 20µm.

### [Step (D)]

Step (D) is a step of heating the carbon-containing powder to 1030°C to 1220°C for at least 4 hours at a second heating rate of 3°C/min to 10°C/min to obtain a carbon material powder. Through step (D), the residual raw coke in the carbon-containing powder can be subjected to at least one of the polycondensation reaction, cracking reaction and dehydrogenation reaction, so that carbon of the residual raw coke can be rearranged into sp² hybrid orbital to become a carbon material powder. **In** one embodiment, step (D) is to heat the carbon-containing powder to 1100°C at the second heating rate of 10°C/min.

### [Step (E)]

Step (E) is a step of after adding pitch (e.g., 4-8wt%) accounting for at least 4wt% of the carbon material powder to the carbon material powder, heating the carbon material powder added with pitch to 1030°C to 1220°C for at least 5 hours at a third heating rate of 0.90°C/min to 1.25°C/min, so as to obtain soft carbon modified by pitch. Through step (E), the softening point of pitch is utilized, so that the carbon material powder added with pitch can reduce the viscosity of the pitch because of the temperature reaching the softening point of the pitch in the heating process of the step (E), and the pitch after the viscosity reduction can modify the tiny pores on the surface of the carbon material powder, so that the specific surface area of the carbon material powder decreases, thereby obtaining the soft carbon of the present disclosure. In one embodiment, step (E) is to heat the carbon material powder added with pitch accounting for 5wt% of the carbon material powder to 1100°C at a third heating rate of 1.22°C/min, and maintaining the temperature for at least 5 hours, so that the soft carbon modified by pitch becomes a first type soft carbon of the present disclosure.

In one embodiment, under the condition that the other steps are the same, in order to obtain a second type soft carbon of the present disclosure, the step (C) is to grade the carbon-containing material after grinding and take out a carbon-containing powder with D₅₀ between 8µm and 12µm, D₁₀ between 2µm and 6µm and D₉₀ between 16µm and 18µm.

In one embodiment, under the condition that the other steps are the same, in order to obtain a third type soft carbon of the present disclosure, the step (D) is to heat the carbon-containing powder to 1180°C to 1220°C at the second heating rate; in the step (E), the third heating rate is 0.90°C/min to 1.25°C/min, and the carbon material powder added with pitch is heated to 1180°C to 1220°C.

### [Step (F)]

Step (F) is to add the soft carbon to graphite as an anode material, and a weight ratio of the soft carbon to the graphite is 1: 1-39. **In** one embodiment, a weight ratio of the soft carbon to the graphite is 1:7/3-39. Also, in another embodiment, the anode material may further include a binder (such as PVDF) and conductive carbon black as a conductive aid. **In** addition, if step (E) is to obtain the first type soft carbon, step (F) will obtain the first type anode material; similarly, if step (E) is to obtain the second type or the third type soft carbon, step (F) will correspondingly obtain the second type or the third type anode material.

The inventors found that by adding a specific proportion of soft carbon to graphite, the internal resistance of the battery can be reduced, so that the cell containing a specific proportion of soft carbon and graphite can greatly reduce the temperature rise during charging and discharging under high-rate charging and discharging (such as the charge and discharge current of 6C), and then improve the safety of the cell in high-power operation. Also, generally speaking, because the electric capacity of soft carbon (about 260mAh/g) is smaller than that of graphite (about 350mAh/g), if too much soft carbon is added to graphite, the electric capacity of the composite anode formed by graphite and soft carbon may be reduced too much, which will affect the energy density of the battery and is not conducive to downstream industrial applications, so the amount of soft carbon added is preferably not more than the amount of graphite. In other words, the amount of soft carbon added is at most equal to the amount of graphite, that is, the weight ratio of soft carbon to graphite is 1:1.

On the other hand, the anode material obtained in step (F) (the first type to the third type anode materials) can also increase the discharge capacity retention rate of the battery. Below, referring to the following embodiments, the effect of the present disclosure is described in detail.

### (Embodiments)

Below, although the present disclosure is specified by various embodiments and comparative examples, the present disclosure is not limited to those embodiments and comparative examples.

### <Embodiment 1>

First, according to the above steps (A) to (E), the first type soft carbon is manufactured. Next, by using manual stacking, an anode, a cathode, an electrolyte, and a separator (brand: Celgard, material: PP, thickness: 20µm) are assembled into a full battery (length x width x height of 4cmx2cmx0.2cm, cell capacity 0.15Ah-0.2Ah).

Specifically, the anode is made by evenly mixing 911.625g of graphite (purchased from China Steel Chemical Corporation, trade name MGP), 23.375 g of the first type soft carbon, 45 g of binder (type PVDF, purchased from Kureha Chemical Industry Co., Ltd., trade name KF9200), and 20 g of conductive aid (conductive carbon black, purchased from Timcal Co., Ltd., trade name: Super P) as the anode material. In the anode material, based on step (F), the weight ratio of the first type soft carbon to graphite in the anode component (graphite and soft carbon) is 1:39, and the anode component accounts for 93.5wt% of the anode material, the binder accounts for 4.5wt% of the anode material, and the conductive carbon black accounts for 2.0wt% of the anode material. Next, the anode material is mixed with 1233g to 1438g of N-methylpyrrolidone (NMP) to form a mixed liquid, and the mixed liquid is coated on a copper foil with a thickness of 14 µm, and dried at 85°C for 0.5 hours to remove NMP and water, so as to form the anode of the full battery. The anode includes the copper foil and a conductive film formed on the copper foil with a thickness of 100µm to 110µm.

On the other hand, the cathode of the full battery includes an aluminum foil as a conductive carrier and a conductive film forming on a surface of the aluminum foil. The conductive film of the cathode of the full battery includes 92.5wt% lithium nickel-cobalt-manganese oxide (LNMC, capacity ≧ 150mAh/g), 2.5wt% PVDF, and 5wt% conductive carbon black (purchased from Timcal Co., Ltd., trade name: Super P). The electrolyte contains 99wt% 1M LiPF₆ solution and 1wt% vinylene carbonate. The LiPF₆ solution includes LiPF₆, EC, EMC and diethyl carbonate (DEC), and a volume ratio of EC:EMC:DEC is 1:1:1. Next, a charge and discharge machine (manufacturer: Maccor, model: Series 4000 ) is used to carry out a discharge capacity retention rate test and an ACIR test (e.g., a battery internal resistance meter manufactured by HIOKI corporation can be used to carry out the test at battery state of charge (SOC) of 50%) at a discharge current of 6C, and the test results are shown in Table 1 below.

### <Embodiment 2>

Except for changing the weight ratio of the first type soft carbon to graphite in step (F) to 1: 19, that is, changing the addition amount of graphite and soft carbon to 888.25g of graphite and 46.75g of the first type soft carbon, so that the first type soft carbon accounts for 5wt% of the anode component (graphite and the first type soft carbon), the discharge capacity retention rate test and the ACIR test at a discharge current of 6C are carried out in the same way as in Embodiment 1, and the test results are shown in Table 1 below.

### <Embodiment 3>

Except for changing the weight ratio of the first type soft carbon to graphite in step (F) to 1:9, that is, changing the addition amount of graphite and soft carbon to 841.5g of graphite and 93.5g of the first type soft carbon, so that the first type soft carbon accounts for 10wt% of the anode component (graphite and the first type soft carbon), the discharge capacity retention rate test and the ACIR test at a discharge current of 6C are carried out in the same way as in Embodiment 1, and the test results are shown in Table 1 below.

### <Embodiment 4>

Except for changing the weight ratio of the first type soft carbon to graphite in step (F) to 1:17/3, that is, changing the addition amount of graphite and soft carbon to 794.75g of graphite and 140.25g of the first type soft carbon, so that the first type soft carbon accounts for 15wt% of the anode component (graphite and the first type soft carbon), the discharge capacity retention rate test and the ACIR test at a discharge current of 6C are carried out in the same way as in Embodiment 1, and the test results are shown in Table 1 below.

### <Comparative example 1>

Except for not adding the first type soft carbon, that is, changing the addition amount of graphite to 935g of graphite, so that the first type soft carbon accounts for 0wt% of the anode component (graphite and the first type soft carbon), the discharge capacity retention rate test and the ACIR test at a discharge current of 6C are carried out in the same way as in Embodiment 1, and the test results are shown in Table 1 below.

**[Table 1]**

| | CE1 | E1 | E2 | E3 | E4 |
|---|---|---|---|---|---|
| discharge capacity retention rate (%) | 53 | 66 | 69 | 69 | 73 |
| ACIR resistance (mΩ) | 32.4 | 31.0 | 30.8 | 29.8 | 31.0 |

As can be seen from Table 1, the discharge capacity retention rate of the anode formed by adding a specific proportion of (the first type) soft carbon in Embodiments 1-4 at the discharge current of 6C is at least 65%, and even can reach 73%; the ACIR of the anode is 31.0mQ or less, and can even reach 30.0 mQ or less. That is to say, compared with Comparative example 1 without the addition of soft carbon, the discharge capacity retention rate of Embodiments 1-4 added with a specific proportion of (the first type) soft carbon is increased by at least 13% and at most 20% at the discharge current of 6C. In addition, compared with Comparative example 1 without the addition of soft carbon, the ACIR of the anode of Embodiments 1-4 added with a specific proportion of (the first type) soft carbon is reduced by at least 4% and at most 8%.

### <Embodiment 5>

First, according to the above steps (A)-(E), the first type soft carbon is manufactured. Next, LiNi_{0.33}Mn_{0.33}Co_{0.33}O₂ is used to carry out a slurry mixing process to form a stable slurry, and then the slurry is evenly coated on the aluminum foil by using a coating process as a cathode, and an anode is made in the same way as in Embodiment 1, but the weight ratio of the first type soft carbon to graphite is changed to 1:4, that is, the first type soft carbon accounts for 20wt% of the anode component (graphite and the first type soft carbon). Next, the cathode and the anode are rolled and cut into appropriate sizes, and then the pole pieces are stacked, filled with liquid, and encapsulated, and finally activated to make it electrochemically active, so as to assemble a soft pack cell with a cell capacity greater than 8Ah (height 7.7mm/width 99mm/length 130mm), and the quick charge temperature rise at charge currents of 1C, 3C and 5C, and the quick discharge temperature rise at discharge currents of 1C, 3C and 5C are tested respectively, and the test results are sorted out in Table 2.

### <Embodiment 6>

Except for changing the weight ratio of the first type soft carbon to graphite in step (F) to 1:7/3, that is, the first type soft carbon accounts for 30wt% of the anode component (graphite and the first type soft carbon), the quick charge temperature rise and quick discharge temperature rise tests are carried out in the same way as in Embodiment 5, and the test results are shown in Table 2 below.

### <Embodiment 7>

Except for changing the weight ratio of the first type soft carbon to graphite in step (F) to 1:1, that is, the first type soft carbon accounts for 50wt% of the anode component (graphite and the first type soft carbon), the quick charge temperature rise and quick discharge temperature rise tests are carried out in the same way as in Embodiment 5, and the test results are shown in Table 2 below.

### <Comparative example 2>

Except for not adding the first type soft carbon, that is, the first type soft carbon accounts for 0wt% of the anode component (graphite and the first type soft carbon), the quick charge temperature rise and quick discharge temperature rise tests are carried out in the same way as in Embodiment 5, and the test results are shown in Table 2 below.

**[Table 2]**

| | quick charge temperature rise (+°C) | | | quick discharge temperature rise (+°C) | | |
|---|---|---|---|---|---|---|
| | 1C | 3C | 5C | 1C | 3C | 5C |
| CE2 | 4.60 | 16.00 | >36.00 | 10.02 | 25.80 | 36.00 |
| E5 | 4.07 | 15.07 | 25.36 | 8.96 | 21.40 | 32.60 |
| E6 | 3.53 | 13.40 | 23.22 | 7.65 | 20.00 | 30.80 |
| E7 | 0.87 | 7.15 | 14.14 | 5.40 | 10.04 | 15.86 |

As can be seen from Table 2, the temperature rise of the anode formed by adding a specific proportion of (the first type) soft carbon in Embodiments 5-7 at the charge current of 5C is less than 30°C, and can even reach less than 15°C; the temperature rise at the discharge current of 5C is less than 33°C, and can even reach less than 16°C. That is to say, compared with Comparative example 2 without adding soft carbon, Embodiments 5-7 adding with a specific proportion of (the first type) soft carbon have a reduction in quick charge temperature rise at the charge current of 5C at least 25%, and the maximum reduction is about 60%, and the reduction in quick discharge temperature rise at the discharge current of 5C is at least 9%, and the maximum reduction is about 55%.

In addition, it can be seen from Table 2 that under the condition that the weight ratio of soft carbon to graphite in the step (F) is 1:1 (Embodiment 7), the temperature rise of the anode made of the anode material obtained in the step (F) is less than 7.2°C at the charge current of 3C, and the reduction of the temperature rise at the charge current of 1C is less than 1°C, which can be said to achieve a very ideal effect of reducing the quick charge temperature rise.

### <Embodiment 8>

First, according to the above steps (A) to (E), the second type soft carbon is manufactured. In addition, the quick charge temperature rise and quick discharge temperature rise tests are carried out in the same way as in Embodiment 7, and the test results are shown in Table 3 below.

**[Table 3]**

| | quick charge temperature rise (+°C) | | | quick discharge temperature rise (+°C) | | |
|---|---|---|---|---|---|---|
| | 1C | 3C | 5C | 1C | 3C | 5C |
| E7 | 0.87 | 7.15 | 14.14 | 5.40 | 10.04 | 15.86 |
| E8 | 0.80 | 6.10 | 10.30 | 3.78 | 9.80 | 13.00 |

As can be seen from Table 3, under the condition that the weight ratio of the soft carbon to the graphite in the step (F) is 1:1, the temperature rise of the anode of Embodiment 8 at the charge current of 5C is less than 11°C, and the temperature rise at the discharge current of 5C is less than 13°C. That is to say, under the condition that the addition ratio of the soft carbon is the same (in Embodiments 7 and 8, the weight ratio of soft carbon to graphite is 1:1), compared with the anode made of the anode material containing the first type soft carbon used in Embodiment 7, the reduction in the temperature rise of the anode made of the anode material containing the second type soft carbon used in Embodiment 8 at the charge current of 5C is at least 25%, and the reduction in the temperature rise at the discharge current of 5C is at least 15%. In addition, the reduction in the temperature rise of the anode made of the anode material containing the second type soft carbon used in Embodiment 8 under the charge/discharge current of 1C and 3C is also better than that of Embodiment 7, it can be seen that the addition of the second type soft carbon to graphite has a better effect on reducing the temperature rise than that of the addition of the first type soft carbon.

### <Embodiment 9>

First, according to the above steps (A)-(E), the second type soft carbon is manufactured. Next, LiNi_{0.8}Mn_{0.1}Co_{0.1}O₂ is used to carry out a slurry mixing process to form a stable slurry, and then the slurry is evenly coated on the aluminum foil by using a coating process as a cathode, and an anode is made in the same way as in Embodiment 1, but the weight ratio of the second type soft carbon to graphite is changed to 1:1, that is, the second type soft carbon accounts for 50wt% of the anode component (graphite and the second type soft carbon). Next, the cathode and the anode are assembled into a soft pack cell with a cell capacity greater than 28Ah (height 8.0mm/length 250mm/width 155mm) in the same way as in Embodiment 5, and the quick charge temperature rise at charge currents of 1C and 3C, and the quick discharge temperature rise at discharge currents of 1C and 3C are tested respectively, and the test results are sorted out in Table 4.

### <Embodiment 10>

First, according to the above steps (A)-(E), the third type soft carbon is manufactured. Next, LiNi_{0.8}Mn_{0.1}Co_{0.1}O₂ is used to carry out a slurry mixing process to form a stable slurry, and then the slurry is evenly coated on the aluminum foil by using a coating process as a cathode, and an anode is made in the same way as in Embodiment 1, but the weight ratio of the third type soft carbon to graphite is changed to 1:7/3, that is, the third type soft carbon accounts for 30wt% of the anode component (graphite and the third type soft carbon). Next, the cathode and the anode are assembled into a soft pack cell with a cell capacity greater than 36Ah (height 8.0mm/length 250mm/width 155mm) in the same way as in Embodiment 5, and the quick charge temperature rise at charge currents of 1C and 3C, and the quick discharge temperature rise at discharge currents of 1C and 3C are tested respectively, and the test results are sorted out in Table 4.

**[Table 4]**

| | cell capacity | quick charge temperature rise | | quick discharge temperature rise | |
|---|---|---|---|---|---|
| | | (+°C) | | (+°C) | |
| | | 1C | 3C | 1C | 3C |
| E9 | 28Ah | 2.15 | 9.72 | 4.99 | 12.81 |
| E10 | 36Ah | 2.06 | 11.86 | 3.25 | 13.21 |

As shown in Table 4, the quick charge temperature rise of the anode made of the anode material containing the second type soft carbon used in Embodiment 9 at 1C is (rising) +2.15°C under the condition that the weight ratio of the soft carbon to the graphite is 1: 1 and the electric capacity of the soft pack cell is 28Ah, and the quick charge temperature rise at 3C is (rising) +9.72°C; in addition, the quick discharge temperature rise at 1C is (rising) +4.99°C, and the quick discharge temperature rise at 3C is (rising) +12.81°C.

On the other hand, as shown in Table 4, the quick charge temperature rise of the anode made of the anode material containing the third type soft carbon used in Embodiment 10 at 1C is (rising) +2.06°C under the condition that the weight ratio of the soft carbon to the graphite is 1:7/3 and the electric capacity of the soft pack cell is 36Ah, and the quick charge temperature rise at 3C is (rising) +11.86°C; in addition, the quick discharge temperature rise at 1C is (rising) +3.25°C, and the quick discharge temperature rise at 3C is (rising) +13.21°C. That is Embodiment 10 obtains the excellent result that the temperature rise at the charge current of 1C is less than 2.1°C, and the temperature rise at the discharge current of 1C is less than 3.3°C.

It can be seen that even if the amount of the third type soft carbon added in Embodiment 10 is less than that of Embodiment 9, a result better than that of Embodiment 9 can be obtained in the test of a larger cell capacity (36Ah) (in general, the temperature rise under the large cell capacity will be higher than the temperature rise under the small cell capacity) in the part of quick charge/quick discharge of 1C. **In** other words, compared with Embodiment 9, the reduction of the temperature rise at the charge current of 1C in Embodiment 10 is at least 4%, and the reduction of the temperature rise at the discharge current of 1C is at least 30%. It can be seen that the addition of the third type soft carbon to graphite has a better effect on reducing the temperature rise than that of the addition of the second type soft carbon.

By the method for increasing safety of lithium-ion batteries during use of the present disclosure, the probability of thermal runaway can be reduced, thus increasing the safety of lithium-ion battery during use.

The present invention is not limited to the above-mentioned embodiments, and various changes may be made within the scope indicated in the claims, and the embodiments obtained by appropriately combining the technical means disclosed in the different embodiments are also included in the technical scope of the present invention.

While the present disclosure has been described by means of specific embodiments, numerous modifications and variations could be made thereto by those skilled in the art without departing from the scope and spirit of the present disclosure set forth in the claims.

## Claims

1. A method for increasing safety of lithium-ion batteries, comprising:
step (A), heating heavy oil to obtain a raw coke;
step (B), heating the raw coke to 850°C to 900°C for at least 4 hours at a first heating rate of 3°C/min to 5°C/min to obtain a carbon-containing material;
step (C), grinding the carbon-containing material, grading the carbon-containing material after grinding, and taking out a carbon-containing powder with D₅₀ between 8µm and 12µm and D₁₀ between 1µm and 8µm;
step (D), heating the carbon-containing powder to 1030°C to 1220°C for at least 4 hours at a second heating rate of 3°C/min to 10°C/min to obtain a carbon material powder;
step (E), after adding pitch accounting for at least 4wt% of the carbon material powder to the carbon material powder, heating the carbon material powder added with pitch to 1030°C to 1220°C for at least 5 hours at a third heating rate of 0.90°C/min to 1.25°C/min, so as to obtain soft carbon modified by pitch; and
step (F), adding the soft carbon to graphite as a first type anode material, and a weight ratio of the soft carbon to the graphite is 1:1-39.

2. The method for increasing the safety of lithium-ion batteries according to claim 1, wherein the step (C) is to grade the carbon-containing material after grinding and take out a carbon-containing powder with D₅₀ between 8µm and 12µm, D₁₀ between 2µm and 6µm and D₉₀ between 16µm and 18µm; the step (F) is to add the soft carbon to graphite as a second type anode material, and the weight ratio of the soft carbon to the graphite is 1:1-39.

3. The method for increasing the safety of lithium-ion batteries according to claim 1, wherein the step (D) is to heat the carbon-containing powder to 1180°C to 1220°C at the second heating rate; in the step (E), the third heating rate is 0.90°C/min to 1.25°C/min, and the carbon material powder added with pitch is heated to 1180°C to 1220°C; the step (F) is to add the soft carbon to graphite as a third type anode material, and the weight ratio of the soft carbon to the graphite is 1:1-39.

4. The method for increasing the safety of lithium-ion batteries according to any one of claims 1 to 3, wherein in the step (F), the weight ratio of the soft carbon to the graphite is 1:7/3-39.

5. The method for increasing the safety of lithium-ion batteries according to any one of claims 1 to 3, wherein the discharge capacity retention rate of the anode made of the first type, the second type or the third type anode material obtained in step (F) is at least 65% at a discharge current of 6C, and the alternating current internal resistance (ACIR) of the anode is 31.0mΩ or less.

6. The method for increasing the safety of lithium-ion batteries according to any one of claims 1 to 3, wherein the temperature rise of the anode made of the first type, the second type or the third type anode material obtained in step (F) at the charge current of 5C is less than 30°C, the temperature rise at the discharge current of 5C is less than 33°C.

7. The method for increasing the safety of lithium-ion batteries according to claim 2, wherein under the condition that the weight ratio of the soft carbon to the graphite in the step (F) is 1: 1, the temperature rise of the anode made of the second type anode material at the charge current of 5C is less than 11°C, and the temperature rise at the discharge current of 5C is less than 13°C.

8. The method for increasing the safety of lithium-ion batteries according to claim 3, wherein under the condition that the weight ratio of the soft carbon to the graphite in the step (F) is 1:7/3 and the electric capacity of the anode made of the third type anode material in the soft pack cell is 36Ah, the temperature rise at the charge current of 1C is less than 2.1°C, and the temperature rise at the discharge current of 1C is less than 3.3°C.

9. The method for increasing the safety of lithium-ion batteries according to any one of claims 1 to 3, wherein under the condition that the weight ratio of soft carbon to graphite in the step (F) is 1:1, the temperature rise of the anode made of the first type, the second type or the third type anode material obtained in the step (F) at the charge current of 3C is less than 7.2°C.

10. The method for increasing the safety of lithium-ion batteries according to any one of claims 1 to 3, wherein in the step (F), the first type, the second type or the third type anode material further comprises a binder and a conductive carbon black.
